# EUROPEAN PATENT APPLICATION

(11) **EP 1 180 735 A1**
(43) Date of publication of application: **20.02.2002**
(21) Application number: 01119801.7
(22) Date of filing: 16.08.2001
(51) Int. Cl.: G05D 16/06, G05D 16/08

(54) **Pressure regulator**

(30) Priority: 17.08.2000 IL 13792000
(71) Applicant: Bron, Dan, Haifa 34759 (IL)
(72) Inventor: Bron, Dan, Haifa 34759 (IL)
(74) Representative: Patentanwälte Westphal, Mussgnug & Partner

(57) **Abstract**

The invention provides a pressure regulator, including a housing having a bottom and provided with an inlet tube having a control rim and connectable to a pipeline under mains pressure, and at least one outlet tube connectable to a consumer; a diaphragm made of an elastomer, located within the housing and retained therein by retaining means; a control rod effectively coupled to the diaphragm and passing through the inlet tube, the rod having a control head at its free end, which head, in the assembled state of the regulator, is located in proximity to, but beyond, the control rim; wherein the bottom of the housing and the bottom-facing surface of the diaphragm define a single chamber serving both as inlet and outlet chamber, and wherein increased pressure in the single chamber causes the diaphragm to bulge away from the bottom, causing the control head to approach the control rim of the inlet tube and increasing the pressure drop in the single chamber, and wherein reduced pressure in the chamber enables the elastic restoring force of the diaphragm to reduce the bulge, pushing down the rod, causing the control head to move away from the control rim of the inlet tube and reducing the pressure drop in the chamber.

## Description

### Field of the Invention

The present invention relates to a pressure regulator, e.g., for an irrigation device, more particularly, for a sprinkler.

### Background of the Invention

The decisive characteristic of a sprinkler is its throw, that is, the ground area covered. As the throw of a sprinkler of a given type and size is clearly a function of the pressure of the water supplied, and as this throw should remain constant in spite of possible changes in mains pressure, pressure regulators are often inserted between the water mains and a branch line which supplies a plurality of sprinklers. These regulators reduce the mains pressure to the level required by the sprinklers and keep this reduced pressure constant, even if the mains pressure changes.

The use of regulators in the above manner, i.e., inserted between the mains and a branch line, has a serious disadvantage: their use produces a pressure drop along the branch line, resulting in a non-uniform water supply by the sprinklers. This non-uniformity can be reduced only by reducing the length of the line.

Alternatively, flow regulators (as opposed to pressure regulators) may be used for each individual sprinkler. Flow regulators, however, produce pressure drops of considerable magnitude, which leaves only a very narrow pressure range for effective regulation.

### Disclosure of the Invention

It is therefore one of the objects of the present invention to provide each of the irrigation devices fed by a branch line that is under mains pressure with its own simple, inexpensive pressure regulator.

According to the invention, the above object is achieved by providing a pressure regulator, comprising a housing having a bottom and provided with an inlet tube having a control rim and connectable to a pipeline under mains pressure, and at least one outlet tube connectable to a consumer; a diaphragm made of an elastomer, located within said housing and retained therein by retaining means; a control rod effectively coupled to said diaphragm and passing through said inlet tube, said rod having a control head at its free end, which head, in the assembled state of said regulator, is located in proximity to, but beyond, said control rim; wherein the bottom of said housing and the bottom-facing surface of said diaphragm define a single chamber serving both as inlet and outlet chamber, and wherein increased pressure in said single chamber causes said diaphragm to bulge away from said bottom, causing said control head to approach the control rim of said inlet tube, increasing the pressure drop in said single chamber, and wherein reduced pressure in said chamber enables the elastic restoring force of said diaphragm to reduce said bulge, pushing down said rod, causing said control head to move away from the control rim of said inlet tube and reducing the pressure drop in said chamber.

### Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a cross-sectional view of a first embodiment of the pressure regulator according to the present invention;
Fig. 2 illustrates another embodiment of the pressure regulator, in which the control rod is not rigidly connected to the diaphragm, and
Fig. 3 illustrates yet another embodiment of the pressure regulator.

### Detailed Description of Preferred Embodiments

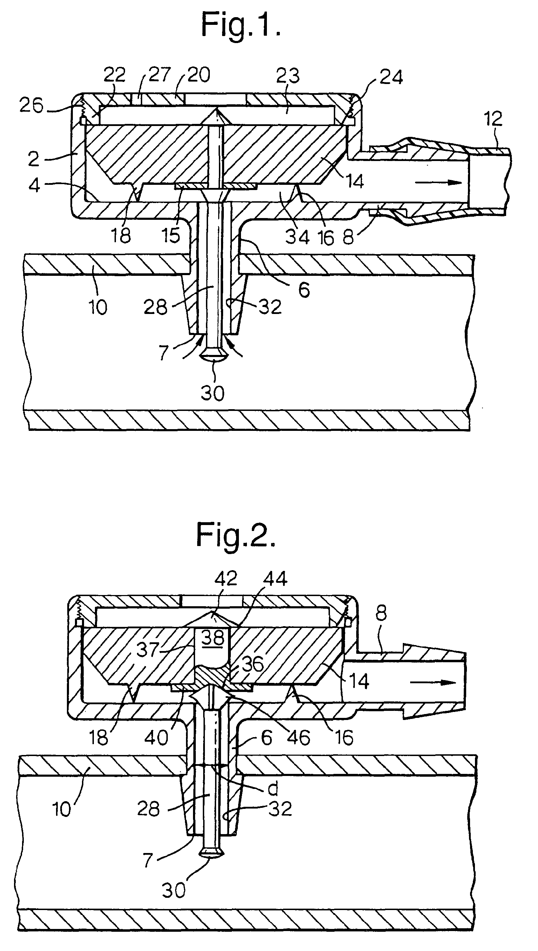

Referring now to the drawings, there is seen in Fig. 1 a housing 2 having a bottom 4 provided with a substantially axial inlet tube 6 having an internal rim 7 and a laterally extending outlet tube 8. Inlet tube 6 and outlet tube 8 are of the conventional "barbed" design which facilitates their introduction into mating components, but opposes their extraction from same. Also seen in Fig. 1 is pipe or branch line 10 which is substantially under mains pressure, and a tube 12 pushed over outlet tube 8 and leading to a consumer, e.g., a sprinkler (not shown).

Further shown is a diaphragm 14 made of an elastomer and located within housing 2, resting either on a rim 16 that is advantageously an integral part of housing 2 (right half of the drawing), or on a rim 18 that is a part of the diaphragm 14 itself (left half of the drawing). Rim 16 or 18 causes the water supply to the consumer to be cut off if pressure in pipe or branch line 10 falls below a minimum, thereby preventing the waste of water and non-uniform irrigation.

Disk 15 enhances the elastic resilient force of diaphragm 14, inasmuch as it reduces the extent of its effective flexible sections, thus facilitating reduction of the amount of elastomeric material required to obtain a certain resilient force.

Diaphragm 14 is held in position by a lid 20 having a peripheral rim 22 and defining, with the top surface of diaphragm 14, a space 23 that is open to the free atmosphere. Lid 20 is attached to housing 2 in one of two possible ways: either with the aid of a snap-in joint 24, shown on the right half of lid 20, or by means of a threaded joint 26, as shown on the left. If the threaded connection is chosen, two holes 27 are provided for the two pins of a key (not shown).

Attached to diaphragm 14 is a control rod 28 passing through inlet tube 6 and having at its free end a head 30 of a diameter slightly larger than that of bore 32 of inlet tube 6.

As can now be appreciated, an advantage of the pressure regulator according to the present invention, *vis-a-vis* prior art pressure regulators, is the fact that it has only one single chamber 34 which is defined between the bottom 4 of housing 2 and the bottom-facing surfaces of diaphragm 14, and which serves as both inlet and outlet chamber, and that the reference force is provided by the resilient force of a diaphragm and not, as usual, by a spring, a feature that facilitates miniaturization and reduces costs. Also, as opposed to conventional regulators in which regulation takes place inside the regulator, causing dirt to collect in the interior of the device, in the regulator according to the invention, the regulation occurs outside of the regulator, i.e., at the internal control rim 7 of the inlet tube, which makes the device practically self-cleaning.

The pressure regulator according to the present invention is a normally open device, the elastic resilience of diaphragm 14 serving as reference force. In operation, e.g., with a sprinkler, the pressure regulator functions as follows:

Assuming the rated pressure, i.e., the working pressure of a certain type of sprinkler to be, e.g., 1.5 Atm, water entering chamber 34 at the much higher mains pressure of about 4 Atm will cause the diaphragm 14 to bulge, thereby pulling up rod 28 and head 30, which latter will partially block access to inlet tube 6, increasing the pressure drop in chamber 34 until an equilibrium is established between the pressure in chamber 34 and the elastic restoring force of diaphragm 14. If the pressure in chamber 34 drops below the rated pressure of 1.5 Atm as a result of a pressure drop in the mains, the elastic restoring force of diaphragm 14 will reduce its bulge, causing rod 28 and head 30 to be pushed down and thereby decreasing the pressure drop in chamber 34 until the above-mentioned equilibrium is reestablished.

The set point of the regulator can be varied in several ways:
a) by altering the length of rod 28. Shorter rods reduce the pressure; longer rods increase it;
b) by selecting a diaphragm 14 of different elastic properties;
c) by altering the diameter of disk 15 (Fig. 1) or flange 40 (Fig. 2). Larger disks 15 or flanges 40 increase the stiffness of diaphragm 14.
d) if the threaded lid 20 is used, altering the height of the lid 20 relative to housing bottom 4 will alter the effective length of rod 28, i.e., the distance of head 30 from the rim of inlet tube 6.

The embodiment of Fig. 2 is identical to that of Fig. 1, except in that control rod 28 is not fixedly attached to diaphragm 14, but is made to maintain its contact with diaphragm 14 by the differential between the line pressure and the pressure downstream of control rim 7, which, acting on control head 30, pushes control rod 28 against a tapering recess 36 in a rigid core 37 of diaphragm 14. Core 37 consists of a shaft 38 ending in a flange 40 on one end and in a pointed head 42 on the other end. Head 42 has a diameter which is larger than the diameter of the hole in diaphragm 14 that accommodates shaft 38. The sharp edge 44 of head 42 serves as a "barb," permitting core 37 to be pushed into diaphragm 14 while opposing its extraction.

In addition, as seen in the embodiment of Fig. 2, head 30 is slightly smaller than the diameter of bore 32 and thus cannot totally block inlet tube 6. Diaphragm 14 is freely located inside housing 2. This embodiment is suitable for large outputs, where the small leak constituted by the annular clearance between head 30 and bore 32 is immaterial.

To prevent control rod 28 from slipping out of inlet tube 6 when line pressure is shut off, the upper end of control rod 28 is provided with two wing-like projections 46.

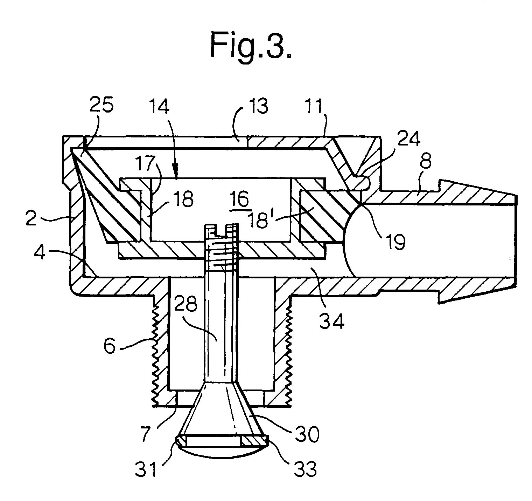

In accordance with the embodiment of Fig. 3, the control rim 7 is located inside inlet tube 6, thereby also shortening control rod 28.

Fig. 3 also shows two more solutions to the problem of retaining diaphragm 14 inside housing 2. On the left half of Fig. 3, there is seen lid 20 with a snap-in joint 24, not, as in Figs. 1 and 2, on the inside of housing 2, but rather on the outside of the housing. On the right half of Fig. 3, lid 20 has altogether been dispensed with, being replaced by an inward-pointing peripheral shoulder 25, which is an integral part of housing 2.

While the basic concept of the pressure regulator according to the present invention proposes that each sprinkler is to have its own regulator, it is obvious that under certain circumstances the regulator can also be provided with more than one outlet tube 8.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A pressure regulator, comprising:
a housing having a bottom and provided with an inlet tube having a control rim and connectable to a pipeline under mains pressure, and at least one outlet tube connectable to a consumer;
a diaphragm made of an elastomer, located within said housing and retained therein by retaining means;
a control rod effectively coupled to said diaphragm and passing through said inlet tube, said rod having a control head at its free end, which head, in the assembled state of said regulator, is located in proximity to, but beyond, said control rim;
wherein the bottom of said housing and the bottom-facing surface of said diaphragm define a single chamber serving both as inlet and outlet chamber, and
wherein increased pressure in said single chamber causes said diaphragm to bulge away from said bottom, causing said control head to approach the control rim of said inlet tube and increasing the pressure drop in said single chamber, and
wherein reduced pressure in said chamber enables the elastic restoring force of said diaphragm to reduce said bulge, pushing down said rod, causing said control head to move away from the control rim of said inlet tube and reducing the pressure drop in said chamber.

2. The pressure regulator as claimed in claim 1, wherein said retaining means is a lid attached to said housing by means of a snap-in joint.

3. The pressure regulator as claimed in claim 1, wherein said retaining means is a lid attached to said housing by means of a threaded joint.

4. The pressure regulator as claimed in claim 1, wherein said retaining means is an inward-facing peripheral shoulder of said housing.

5. The pressure regulator as claimed in claim 1, wherein said diaphragm rests in said housing on a rim that is an integral part of said housing.

6. The pressure regulator as claimed in claim 1, wherein said diaphragm rests in said housing on a rim that is an integral part of said diaphragm.

7. The pressure regulator as claimed in claim 1, wherein said diaphragm has a rigid core with a tapering recess at one of its ends and comprising a shaft ending in a flange on one end and a head on the other end, said head having a diameter larger than the diameter of said shaft.
